# FASCICULE DE BREVET EUROPEEN

(11) **EP 3 936 428 B1**
(45) Date de publication et mention de la délivrance du brevet: **15.11.2023**
(21) Numéro de dépôt: 21181004.9
(22) Date de dépôt: 22.06.2021
(51) Int. Cl.: B64C 1/14, B64D 45/00

(54) **BARRIÈRE AMOVIBLE LÉGÈRE À ABSORPTION D'ÉNERGIE ET AÉRONEF COMPRENANT AU MOINS UNE TELLE BARRIÈRE AMOVIBLE**
LEICHTE ABNEHMBARE ENERGIEABSORBIERENDE ABDECKUNG UND LUFTFAHRZEUG MIT MINDESTENS EINER SOLCHEN ABNEHMBAREN ABDECKUNG
REMOVABLE BARRIER DOOR WITH ENERGY ABSORPTION AND AIRCRAFT COMPRISING AT LEAST ONE SUCH REMOVABLE BARRIER

(30) Priorité: 06.07.2020 FR 2007120
(43) Date de publication de la demande: 12.01.2022
(73) Titulaire: Airbus SAS, 31700 Blagnac (FR)
(72) Inventeur: LEGER, Thierry, 31700 BLAGNAC (FR); SALGUES, Benoît, 31700 BLAGNAC (FR)
(74) Mandataire: Fantin, Laurent

(56) Documents cités:
- WO-A1-2006/024726
- FR-A1- 3 036 098
- US-A- 5 533 773
- US-A1- 2018 346 091

## Description

La présente demande se rapporte à une barrière amovible légère à absorption d'énergie ainsi qu'à un aéronef comprenant au moins une telle barrière amovible.

Selon un mode de réalisation, la cabine de pilotage d'un aéronef est séparée de la cabine de passagers par une cloison présentant une ouverture obturée par une porte blindée qui comprend un premier côté relié à la cloison par un système d'articulation ainsi qu'un deuxième côté relié à la cloison par un système de verrouillage/déverrouillage. La commande du système de verrouillage/déverrouillage est contrôlée depuis l'intérieur de la cabine de pilotage. La porte blindée, ses systèmes d'articulation et de verrouillage/déverrouillage ainsi que la cloison entourant la porte sont dimensionnés pour assurer la reprise des efforts en cas d'une tentative d'intrusion. Par ailleurs, la cloison et/ou la porte blindée sont équipées d'un dispositif d'équilibrage des pressions, de part et d'autre de la cloison et de la porte blindée, en cas de dépressurisation dans la cabine de pilotage ou dans la cabine de passagers. Enfin, un dispositif de visualisation permet aux personnes présentes dans la cabine de pilotage :
- de visualiser la personne souhaitant rentrer et de déclencher le déverrouillage de la porte blindée si cette personne est autorisée à pénétrer dans la cabine de pilotage, ou
- de s'assurer que la zone est libre de toute occupation avant de déclencher le déverrouillage de la porte pour accéder à la cabine de passagers.

Lorsque la porte blindée est fermée et verrouillée, elle offre une protection efficace contre les tentatives d'intrusion à l'intérieur de la cabine de pilotage.

Selon une configuration, un couloir permet d'accéder à la porte blindée.

Pour renforcer la sécurité, il est possible d'utiliser ce couloir comme un sas d'entrée et de prévoir à l'entrée du couloir une barrière amovible configurée pour occuper un état ouvert lorsque la porte blindée est fermée et verrouillée ainsi qu'un état fermé lorsque la porte blindée est déverrouillée. Ainsi, lorsqu'une personne souhaite accéder à la cabine de pilotage, elle se positionne dans le couloir et ferme la barrière amovible. Dès lors, la personne présente dans la cabine de pilotage peut visualiser la personne souhaitant rentrer et déclencher le déverrouillage de la porte blindée si cette personne est autorisée à pénétrer dans la cabine de pilotage. Pendant que la porte blindée est à l'état déverrouillé, la barrière amovible empêche toute personne de pénétrer dans le couloir et d'accéder à la cabine de pilotage. De façon similaire, pour la sortie d'une personne de la cabine de pilotage vers la cabine de passager, la personne située dans le poste de pilotage s'assure que la zone de sas est libre de toute occupation.

Selon un mode de réalisation, la barrière amovible pourrait être une deuxième porte blindée. Toutefois, cette solution n'est pas satisfaisante car elle conduit entre autres à augmenter sensiblement la masse embarquée correspondant à la masse de la barrière et à la masse des renforcements structuraux nécessaires à la transmission des efforts en cas de tentative d'intrusion. De plus, il n'est pas nécessaire que la barrière amovible procure un niveau de résistance aussi élevé que la porte blindée. Elle doit seulement ralentir un éventuel intrus pour donner le temps aux personnes dans la cabine de pilotage de refermer et verrouiller la porte blindée.

Le document WO2006/024726 propose une porte destinée à fermer une ouverture à l'intérieur d'un aéronef, qui comprend un dispositif permettant le passage de l'air à travers la porte dans un sens mais empêchant ce passage dans le sens opposé.

La présente invention vise à remédier à tout ou partie des inconvénients de l'art antérieur.

A cet effet, l'invention a pour objet une barrière amovible comprenant un panneau configuré pour obturer au moins partiellement une ouverture délimitée par un encadrement. Selon l'invention, la barrière amovible comprend plusieurs sangles reliées chacune au panneau par au moins un élément de jonction et présentant chacune des première et deuxième extrémités, ainsi que pour chaque sangle une première liaison configurée pour relier au moins temporairement la première extrémité de la sangle à un premier bord de l'encadrement, une deuxième liaison configurée pour relier au moins temporairement la deuxième extrémité de la sangle à un deuxième bord de l'encadrement, au moins une surlongueur repliée, positionnée entre l'élément de jonction et au moins une des première et deuxième extrémités de la sangle, ainsi qu'au moins une liaison fusible maintenant la surlongueur repliée.

L'invention permet d'obtenir une barrière amovible de conception simple et légère. Grâce aux surlongueurs et aux liaisons fusibles, la barrière amovible est capable d'équilibrer les pressions de part et d'autre de la barrière amovible, d'absorber une partie de l'énergie générée lors d'une tentative d'intrusion et de limiter les efforts transmis par la barrière aux bords de l'encadrement par l'intermédiaire des première et deuxième liaisons. Ainsi, les structures auxquelles est reliée la barrière amovible n'ont pas besoin d'être renforcées ou d'intégrer des systèmes d'équilibrage des pressions.

Selon une autre caractéristique, ladite au moins une surlongueur de chaque sangle est située au niveau de la première ou de la deuxième extrémité de la sangle de telle façon que
- lorsque la surlongueur correspond à une première surlongueur au niveau de la première extrémité de la sangle, la sangle comprend ladite première surlongueur repliée et au moins une première liaison fusible maintenant la première surlongueur repliée et présentant un premier seuil de résistance ; et
- lorsque la surlongueur correspond à une deuxième surlongueur au niveau de la deuxième extrémité de la sangle, la sangle comprend ladite deuxième surlongueur repliée et au moins une deuxième liaison fusible maintenant la deuxième surlongueur repliée et présentant un deuxième seuil de résistance.

Dans un mode particulier de réalisation de la barrière amovible, chaque sangle comprend ladite première surlongueur et ladite deuxième surlongueur.

Selon une autre caractéristique, chaque surlongueur comprend au moins deux plis délimitant au moins trois tronçons superposés les uns sur les autres. En complément, la liaison fusible de chaque surlongueur comprend au moins une couture reliant au moins deux tronçons de la surlongueur et présentant une longueur ainsi qu'une densité de points de couture, la longueur et/ou la densité de points de couture de chaque couture étant ajustées en fonction du seuil de résistance souhaité pour la liaison fusible.

Selon une autre caractéristique, le premier seuil de résistance de la première liaison fusible est inférieur au deuxième seuil de résistance de la deuxième liaison fusible, le premier seuil étant déterminé de manière à ce que la première liaison fusible se rompe en cas d'une différence de pression de part et d'autre de la barrière amovible dépassant un seuil donné. Selon une autre caractéristique, pour chaque sangle, le seuil de résistance de chaque liaison fusible est déterminé pour éviter un endommagement de la sangle et des première et deuxième liaisons en cas d'un chargement de la barrière amovible.

Selon une autre caractéristique, le panneau est souple.

Selon une autre caractéristique, le panneau comprend au moins un renfort pour le rigidifier. L'invention a également pour objet un aéronef comprenant au moins une barrière amovible selon l'une des caractéristiques précédentes.

Selon une configuration, l'aéronef comporte une cabine de pilotage, une cabine de passagers, un sas d'entrée reliant la cabine de passagers et la cabine de pilotage délimité par une porte blindée ainsi qu'une barrière amovible décalée vers la cabine de passagers par rapport à la porte blindée, ladite barrière amovible étant positionnée au niveau d'un encadrement délimitant une ouverture et comportant des premier et deuxième bords parallèles entre eux. Selon l'invention, le panneau présente une première face orientée vers la cabine de passagers ainsi qu'une deuxième face opposée à la première face, les sangles étant positionnées sur au moins l'une des première et deuxième faces.

Selon une autre caractéristique, la barrière amovible comprend au moins un système d'accrochage coopérant avec l'encadrement, configuré pour relier temporairement les deuxièmes extrémités des sangles et l'encadrement.

Selon une autre caractéristique, chaque système d'accrochage comprend un oeillet, positionné sur la sangle à proximité de la deuxième extrémité, ainsi qu'un crochet solidaire de l'encadrement, le système d'accrochage étant configuré pour occuper un état décroché dans lequel la sangle est écartée du crochet et un état accroché dans lequel l'oeillet de la sangle est suspendu au crochet.

Selon une autre caractéristique, pour chaque système d'accrochage, le crochet est positionné sur une face du deuxième bord de l'encadrement orientée vers la cabine de pilotage.

Selon une autre caractéristique, le panneau comprend au moins deux parties reliées par une jonction fusible.

Selon une autre caractéristique, le panneau comprend au moins un côté relié directement ou indirectement à l'encadrement, la jonction fusible étant positionnée proche du et parallèlement au côté du panneau relié directement ou indirectement à l'encadrement. En particulier, cette jonction fusible est telle qu'elle présente une limite de résistance inférieure à celles des jonctions fusibles des sangles.

D'autres caractéristiques et avantages ressortiront de la description de l'invention qui va suivre, description donnée à titre d'exemple uniquement, en regard des dessins annexés parmi lesquels :
- La figure 1 est une vue de dessus d'une partie avant d'un aéronef illustrant un mode de réalisation,
- La figure 2 est une vue de dessus d'un couloir d'accès à une cabine de pilotage équipé d'une barrière amovible à l'état ouvert illustrant un mode de réalisation de l'invention,
- La figure 3 est une vue de dessus d'un couloir d'accès à une cabine de pilotage équipé d'une barrière amovible à l'état fermé illustrant un mode de réalisation de l'invention,
- La figure 4 est une vue arrière d'une barrière amovible illustrant un mode de réalisation de l'invention,
- La figure 5 est une vue de face d'une partie de la barrière amovible visible sur la figure 4,
- La figure 6 est une vue arrière d'une partie de la barrière amovible visible sur la figure 4,
- La figure 7 est une vue de dessus de la barrière amovible visible sur la figure 4,
- La figure 8 est une vue de dessus d'un premier côté de la barrière amovible visible sur la figure 4 et d'un premier bord de l'encadrement,
- La figure 9 est une vue de dessus d'un deuxième côté de la barrière amovible visible sur la figure 4 et d'un deuxième bord de l'encadrement,
- La figure 10 est une vue de face d'un système d'accrochage d'une sangle sur un bord d'encadrement, à l'état décroché, illustrant un mode de réalisation de l'invention,
- La figure 11 est une vue de face du système d'accrochage visible sur la figure 10 à l'état accroché,
- La figure 12 est une vue de dessus d'une barrière amovible, à l'état fermé, avec des surlongueurs repliées illustrant un mode de réalisation de l'invention,
- La figure 13 est une vue de dessus de la barrière amovible visible sur la figure 12 en cas de dépressurisation dans l'un des zones séparées par la barrière amovible, après la rupture d'une partie des jonctions fusibles,
- La figure 14 est une vue de dessus de la barrière amovible visible sur la figure 12 en cas d'une tentative d'intrusion, après la rupture de toutes les jonctions fusibles,
- La figure 15 est une vue de face d'une barrière amovible illustrant un autre mode de réalisation avec le panneau comprenant deux parties reliées par une jonction fusible,
- La figure 16 est une vue de dessus d'un côté de la barrière amovible visible sur la figure 15,
- La figure 17 est une vue de face d'un encadrement comportant deux barrières amovibles illustrant un autre mode de réalisation de l'invention.

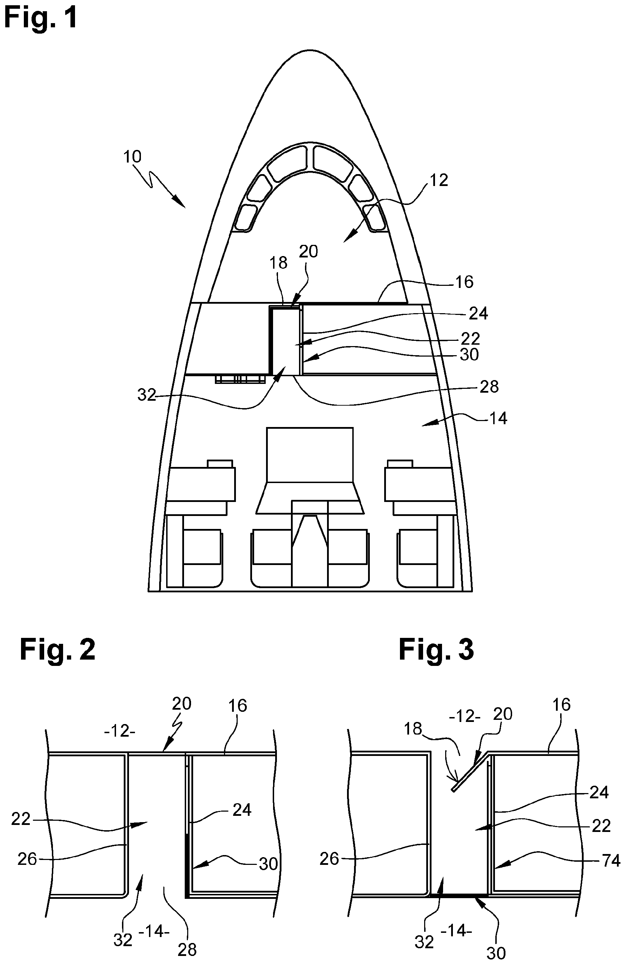

Sur la figure 1, un aéronef 10 comprend une cabine de pilotage 12, une cabine de passagers 14, au moins une première cloison 16 séparant la cabine de pilotage 12 et la cabine de passagers 14, au moins une première ouverture 18 traversant la première cloison 16 ainsi qu'une porte blindée 20 prévue pour obturer la première ouverture 18. Selon une configuration, l'aéronef 10 comprend un couloir 22, reliant la cabine de pilotage 12 et la cabine de passagers 14, délimité par des première et deuxième parois latérales 24, 26 et débouchant via la première ouverture 18 dans la cabine de pilotage 12 et via une deuxième ouverture 28, appelée entrée, dans la cabine de passagers 14. Tous ces éléments sont connus et ne sont pas plus détaillés.

Selon un mode de réalisation visible sur les figures 2 et 3, l'aéronef 10 comprend au moins une barrière amovible 30 positionnée dans le couloir 22, décalée vers la cabine de passagers 14 par rapport à la porte blindée 20, configurée pour occuper un état ouvert, visible sur la figure 2, dans lequel la barrière amovible 30 dégage au moins partiellement le couloir 22 ainsi qu'un état fermé, visible sur la figure 3, dans lequel la barrière amovible 30 obture le couloir 22 et interdit l'accès à la porte blindée 20.

Selon une configuration, la barrière amovible 30 est positionnée au niveau de l'entrée ou la deuxième ouverture 28 du couloir 22 à l'état fermé.

Selon ce mode de réalisation, le couloir 22, la porte blindée 20 et la barrière amovible 30 forment un sas d'entrée 32 de la cabine de pilotage 12. Lorsque la porte blindée 20 est à l'état fermé et verrouillé, la barrière amovible 30 est à l'état ouvert. Lorsqu'une personne souhaite accéder à la cabine de pilotage 12, elle se positionne dans le couloir 22, entre la porte blindée 20 et la barrière amovible 30 et ferme la barrière amovible 30. Cette dernière étant à l'état fermé, la porte blindée 20 est déverrouillée et ouverte en toute sécurité. La barrière amovible 30 empêche toute intrusion dans la cabine de pilotage 12. Tant que la porte blindée 20 est à l'état déverrouillé, la barrière amovible 30 est à l'état fermé. Dès que la porte blindée 20 est de nouveau à l'état verrouillé, la barrière amovible 30 peut être positionnée à l'état ouvert.

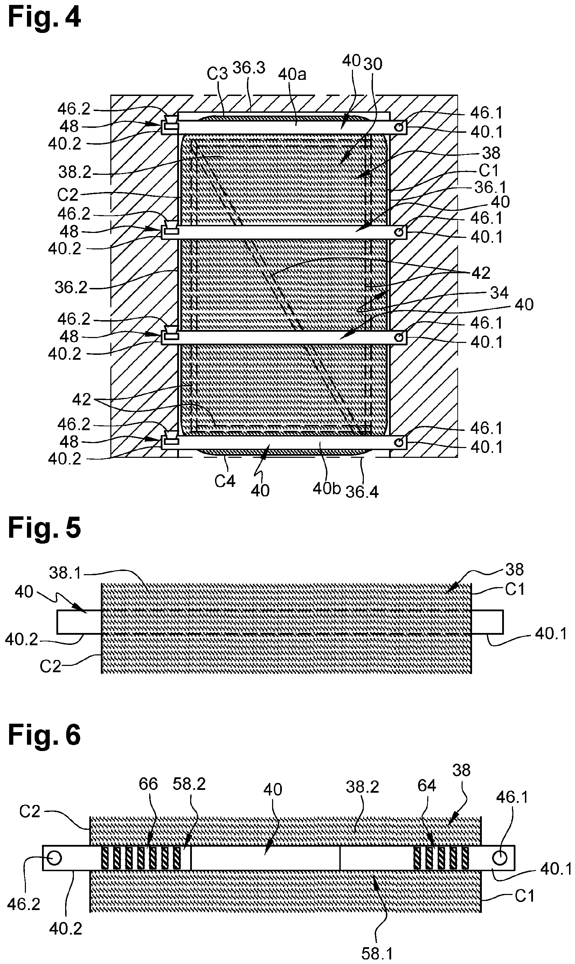

Quel que soit le mode de réalisation, à l'état fermé, la barrière amovible 30 est positionnée au niveau d'un encadrement 34 d'une ouverture 28 comportant deux bords 36.1, 36.2 sensiblement verticaux ainsi que deux bords 36.3, 36.4 sensiblement horizontaux, visibles sur la figure 4. A l'état fermé, la barrière amovible 30 obture sensiblement toute l'ouverture 28 et relie des premier et deuxième bords parallèles. Pour la suite de la description, les premier et deuxième bords reliés par la barrière amovible 30 sont les deux bords 36.1, 36.2 sensiblement verticaux. Toutefois, la barrière amovible 30 pourrait relier les deux bords 36.3, 36.4 sensiblement horizontaux.

Quel que soit le mode de réalisation, l'encadrement 34 comprend au moins deux bords parallèles.

La barrière amovible 30 comprend un panneau 38 configuré pour obturer approximativement toute l'ouverture 28 ainsi que plusieurs sangles 40, reliées au panneau 38, présentant chacune une première extrémité 40.1 configurée pour être reliée au premier bord 36.1 au moins à l'état fermé ainsi qu'une deuxième extrémité 40.2 configurée pour être reliée au deuxième bord 36.2 au moins à l'état fermé.

Le panneau 38 présente une géométrie proche de celle de l'ouverture 28. Ainsi, le panneau 38 présente un premier côté C1 parallèle et proche du premier bord 36.1 de l'encadrement 34, un deuxième côté C2 parallèle et proche du deuxième bord 36.2 de l'encadrement 34, un troisième côté C3 parallèle et proche du troisième bord 36.3 de l'encadrement 34 et un quatrième côté C4 parallèle et proche du quatrième bord 36.4 de l'encadrement 34.

Selon un mode de réalisation, le panneau 38 est souple.

Selon une conception visible sur la figure 4, le panneau 38 souple comprend au moins un renfort 42 pour le rigidifier. Chaque renfort 42 peut se présenter sous la forme d'une tige rigide ou semi-rigide ou de plusieurs tiges rigides ou semi-rigides mises bout à bout. A titre d'exemple, chaque renfort peut être métallique ou en matériau composite.

Selon une configuration, les renforts 42 sont positionnés à proximité des côtés C1 à C4 du panneau 38. Dans le cas d'un panneau 38 approximativement rectangulaire, ce dernier comprend quatre renforts 42 à proximité des quatre côtés C1 à C4, formant un rectangle, ainsi qu'un cinquième renfort 42 reliant deux sommets opposés du rectangle. Bien entendu, d'autres agencements sont envisageables pour le (ou les) renfort(s) 42.

Selon un mode de réalisation, le panneau 38 est en tissu résistant aux coupures. En présence de renforts 42, le panneau 38 en tissu comprend des passants ou des ourlets pour relier chaque renfort 42 au panneau 38.

Bien entendu, l'invention n'est pas limitée à ces modes de réalisation pour le panneau 38.

Quel que soit le mode de réalisation, le panneau 38 doit être léger. Dans le cas d'un sas d'entrée 32, le panneau 38 présente une première face 38.1 orientée vers la cabine de passagers 14 à l'état fermé ainsi qu'une deuxième face 38.2 opposée à la première face 38.1, orientée vers la cabine de pilotage 12.

Selon un mode de réalisation, chaque sangle 40 se présente sous la forme d'une bande de tissu. Pour donner un ordre de grandeur, chaque sangle 40 présente une largeur de l'ordre de 5 à 10 cm. A titre d'exemple, chaque sangle 40 est réalisée dans la même matière que les ceintures de sécurité d'aéronef.

Au moins une des sangles 40 peut comprendre des fibres de renfort pour résister aux coupures.

Quel que soit le mode de réalisation, chaque sangle 40 est souple.

Chaque sangle 40 est reliée au panneau 38 par au moins un élément de jonction 44, comme au moins une couture par exemple, s'étendant entre des première et deuxième extrémités 44.1, 44.2.

Selon un agencement, les sangles 40 de la barrière amovible 30 sont parallèles entre elles et parallèles à une première direction approximativement perpendiculaire aux premier et deuxième bords 36.1, 36.2 de l'encadrement 34 qu'elles relient à l'état fermé. Selon une première alternative, ces sangles 40 sont régulièrement réparties selon une deuxième direction perpendiculaire à la première direction. Selon une deuxième alternative, les sangles 40 sont réparties de façon irrégulière selon la deuxième direction perpendiculaire à la première direction, de telle façon que l'espace entre les sangles selon cette deuxième direction est moins élevé dans une partie centrale du panneau 38 que l'espace entre les sangles dans des parties inférieure ou supérieure du panneau 38.

Dans le cas d'un panneau 38 rectangulaire, une première sangle 40a est positionnée au niveau du côté C3 du panneau 38 et une deuxième sangle 40b est positionnée au niveau du côté C4 du panneau 38.

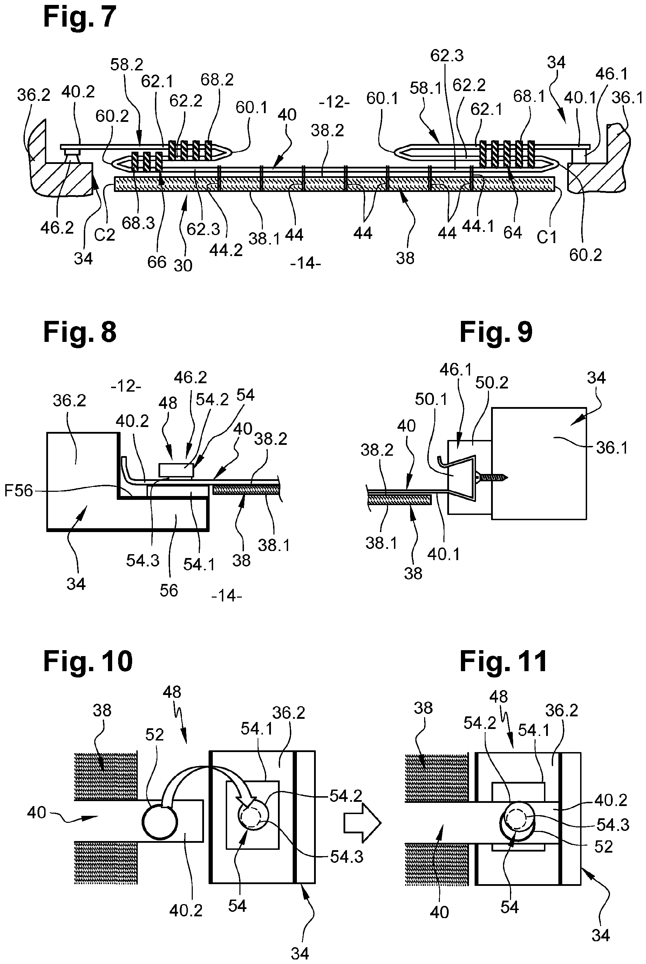

La barrière amovible 30 comprend, pour chaque sangle 40, une première liaison 46.1 pour relier, au moins à l'état fermé, la première extrémité 40.1 de la sangle 40 et le premier bord 36.1 ainsi qu'une deuxième liaison 46.2 pour relier, au moins à l'état fermé, la deuxième extrémité 40.2 de la sangle 40 et le deuxième bord 36.2. Au moins une des première et deuxième liaisons 46.1, 46.2 est un système d'accrochage 48 assurant une liaison temporaire et occupant un état décroché, comme illustré sur la figure 10, dans lequel la première et/ou deuxième extrémité(s) 40.1, 40.2 de la sangle 40 et le premier et/ou deuxième bord(s) 36.1, 36.2 ne sont pas reliés, ainsi qu'un état accroché, comme illustré sur la figure 11, dans lequel la première et/ou deuxième extrémité(s) 40.1, 40.2 de la sangle 40 et le premier et/ou deuxième bord(s) 36.1, 36.2 sont reliés.

Selon un mode de réalisation, chacune des première et deuxième liaisons 46.1, 46.2 est un système d'accrochage 48 assurant une liaison temporaire.

Selon un autre mode de réalisation, la première liaison 46.1 est permanente. Elle relie la première extrémité 40.1 de la sangle 40 et le premier bord 36.1 continuellement, à l'état fermé et à l'état ouvert. La deuxième liaison 46.2 est un système d'accrochage 48. Elle relie temporairement la deuxième extrémité 40.2 de la sangle 40 et le deuxième bord 36.2 uniquement à l'état fermé.

Les premières liaisons 46.1 permanentes assurent une fonction de charnière entre la barrière amovible 30 et le premier bord 36.1 de l'encadrement 34.

Selon une première variante, chaque première liaison 46.1 comprend au moins un élément de fixation, comme une vis par exemple, traversant la sangle et se vissant dans l'encadrement 34.

Selon une deuxième variante visible sur la figure 9, chaque première liaison 46.1 comprend un premier profilé 50.1 configuré pour s'emboîter dans un deuxième profilé 50.2 fixé sur l'encadrement 34, la sangle 40 étant pincée entre les premier et deuxième profilés 50.1, 50.2. Un unique deuxième profilé 50.2 peut être commun aux différentes sangles 40 alors qu'un premier profilé 50.1 est prévu pour chaque sangle 40.

Bien entendu, l'invention n'est pas limitée à ces modes de réalisation pour la première liaison 46.1.

Selon un mode de réalisation visible sur les figures 8, 10 et 11, chaque système d'accrochage 48 comprend un oeillet 52, positionné sur la sangle 40 à proximité de l'une de ses première et deuxième extrémités 40.1, 40.2, générant un trou traversant la sangle 40, ainsi qu'un crochet 54 solidaire de l'encadrement 34. Selon une configuration, chaque crochet 54 comprend une platine 54.1 fixée sur l'encadrement 34 grâce à au moins un élément de fixation, comme une ou plusieurs vis, une tête 54.2 cylindrique comportant un chant périphérique présentant une section légèrement inférieure à celle de l'oeillet 52 pour passer à travers ce dernier, ainsi qu'une tige 54.3 reliant la platine 54.1 et la tête 54.2, présentant une section inférieure à celle de la tête 54.2 et espacée du chant périphérique de la tête 54.2 pour former un crochet.

A l'état décroché visible sur la figure 10, la sangle 40 est écartée du crochet 54. Pour passer à l'état accroché, la sangle 40 est saisie, son oeillet 52 est positionné au droit de la tête 54.2 du crochet 54 puis enfilé autour de la tête 54.2 jusqu'à être positionné au niveau de la tige 54.3. La tige 54.3 ayant une section plus petite que celle de la tête 54.2, l'oeillet 52 est suspendu au crochet 54 et ne peut pas se décrocher sans l'intervention d'une personne.

Selon ce mode de réalisation, les sangles 40 sont accrochées ou décrochées indépendamment les unes des autres.

Lorsque la barrière amovible 30 est utilisée pour contrôler l'accès à la cabine de pilotage 12, les systèmes d'accrochage et/ou l'encadrement 34 sont configurés pour que les systèmes d'accrochage 48 ne soient pas accessibles depuis la cabine de passagers 14. A cet effet, les sangles 40 sont par exemple positionnées sur la deuxième face 38.2 du panneau 38 et, pour chaque système d'accrochage 48, le crochet 54 est positionné sur une face du deuxième bord 36.2 de l'encadrement 34 orientée vers la cabine de pilotage 12. Il est à noter que sans sortir du cadre de l'invention, les sangles peuvent aussi être positionnées sur la première face 38.1 du panneau 38. Selon une configuration, le deuxième bord 36.2 de l'encadrement 34 présente une section en L et comprend une aile 56 présentant une première face F56, orientée vers la cabine de pilotage 12, sur laquelle sont positionnés les crochets 54 des différents systèmes d'accrochage 48.

Bien entendu, d'autres solutions sont envisageables pour le (ou les) système(s) d'accrochage 48. Ainsi, selon un autre mode de réalisation, la barrière amovible 30 comprend un unique système d'accrochage 48 commun aux différentes sangles 40, comme un montant auquel sont reliées de manière permanente les différentes sangles 40 et qui coopère avec l'encadrement 34 de manière à occuper un état accroché dans lequel le montant est relié à l'encadrement 34 et un deuxième état décroché dans lequel le montant n'est pas relié à l'encadrement 34. En complément, pour au moins un système d'accrochage 48, la barrière amovible 30 comprend un système de verrouillage configuré pour occuper un état verrouillé dans lequel il maintient le système d'accrochage à l'état accroché et interdit un changement d'état du système d'accrochage 46 à l'état décroché ainsi qu'un état déverrouillé dans lequel il autorise un changement d'état du système d'accrochage 46 à l'état décroché.

Quel que soit le mode de réalisation, la barrière amovible 30 comprend au moins un système d'accrochage 48, coopérant avec l'encadrement 34, configuré pour occuper un état décroché dans lequel il ne relie pas la barrière amovible 30 et l'encadrement 34 et un état accroché dans lequel il relie la barrière amovible 30 et l'encadrement 34.

Selon un mode de réalisation visible sur les figures 6, 7, 12 à 14, au moins une sangle 40 comprend au moins une surlongueur 58.1, 58.2, positionnée entre au moins une de ses première et deuxième extrémités 40.1, 40.2 et l'élément de jonction 44 reliant la sangle 40 et le panneau 38. Selon une configuration, chaque surlongueur 58.1, 58.2 comprend au moins deux plis 60.1, 60.2 délimitant au moins trois tronçons 62.1, 62.2, 62.3 superposés les uns sur les autres. Dans une variante, au moins l'une des première et deuxième extrémités 44.1, 44.2 de l'élément de jonction 44 est située à proximité du pli 60.2 de telle façon que le tronçon 62.3 a une longueur quasiment nulle : la surlongueur 58.1, 58.2 comprend alors les deux tronçons 62.1, 62.2.

Chaque première ou deuxième surlongueur 58.1, 58.2 présente, lorsqu'elle est dépliée, une longueur L1, L2 correspondant à la distance entre la première ou deuxième liaison 46.1, 46.2 et la première ou deuxième extrémité 44.1, 44.2 de l'élément de jonction 44 reliant le panneau 38 et la sangle 40.

Pour chaque surlongueur 58.1, 58.2, la sangle 40 comprend au moins une liaison fusible 64, 66 reliant au moins deux des trois tronçons 62.1, 62.2, 62.3 de la surlongueur 58.1, 58.2 pour maintenir la surlongueur 58.1, 58.2 repliée.

Chaque première ou deuxième liaison fusible 64, 66 présente un seuil de résistance S1, S2, le seuil de résistance S1, S2 correspondant à l'énergie nécessaire pour la rompre la liaison fusible. Ainsi, tant que l'énergie exercée sur la sangle 40 est inférieure au seuil de résistance S1, S2, la liaison fusible 64, 66 maintient la surlongueur 58.1, 58.2 repliée. Dès que l'énergie exercée sur la sangle 40 dépasse le seuil de résistance S1, S2, la liaison fusible 64,66 se rompt et la surlongueur 58.1, 58.2 se déplie.

Pour chaque sangle 40, le seuil de résistance S1, S2 de chaque liaison fusible 64, 66 est inférieur à la résistance en traction de la sangle 40 et à la résistance de chacune des première et deuxième liaisons 46.1, 46.2 afin d'éviter un endommagement des sangles 40 et des première et deuxième liaisons 46.1, 46.2 en cas d'un chargement de la barrière amovible 30, par exemple lors d'une tentative d'intrusion.

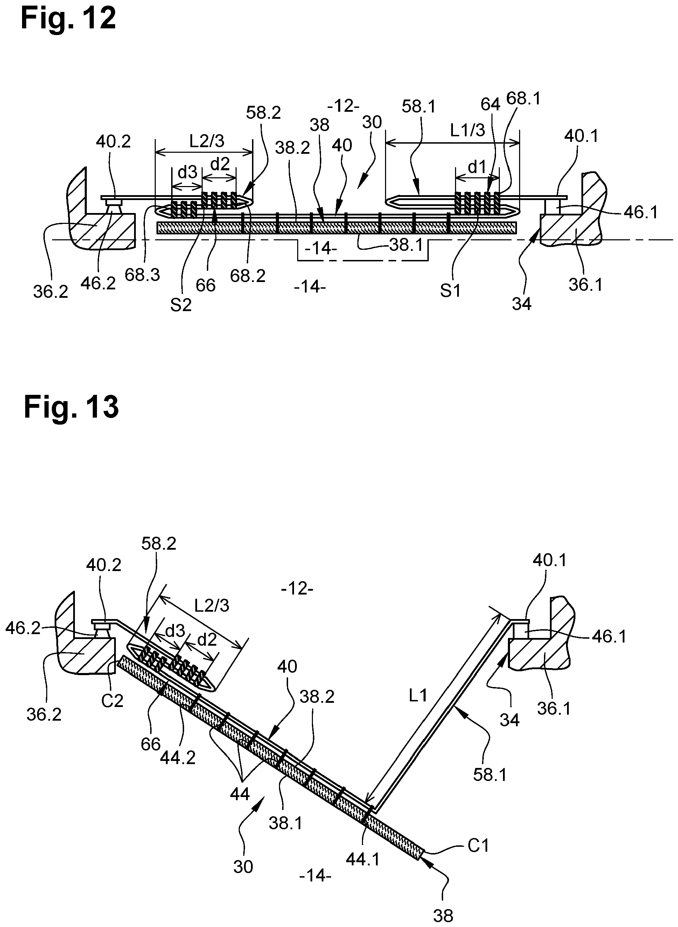

Selon une configuration visible sur les figures 7 et 12, chaque sangle 40 comprend une première surlongueur 58.1 repliée et au moins une première liaison fusible 64 maintenant la première surlongueur 58.1 repliée au niveau de la première extrémité 40.1, ainsi qu'une deuxième surlongueur 58.2 repliée et au moins une deuxième liaison fusible 66 maintenant la deuxième surlongueur 58.2 repliée au niveau la deuxième extrémité 40.2. En variante, chaque sangle 40 comprend une unique surlongueur 58.1, 58.2 repliée au niveau de la première ou deuxième extrémité 40.1, 40.2 et au moins une liaison fusible maintenant la surlongueur repliée.

Selon un mode de réalisation, la première ou deuxième liaison fusible 64, 66 de chaque surlongueur 58.1, 58.2 comprend au moins une couture 68.1, 68.2, 68.3 présentant une longueur d1, d2, d3 ainsi qu'une densité de points de couture. Pour chaque couture 68.1, 68.2, 68.3, la longueur d1, d2, d3 et/ou la densité de points de couture sont ajustées en fonction du seuil de résistance S1, S2 souhaité pour la première ou deuxième liaison fusible 64, 66. Selon une configuration visible sur les figures 7 et 12, la première liaison fusible 64 comprend une seule couture 68.1 reliant les premier et deuxième tronçons 62.1, 62.2 de la première surlongueur 58.1. La deuxième liaison fusible 66 comprend une première couture 68.2 reliant les premier et deuxième tronçons 62.1, 62.2 de la deuxième surlongueur 58.2 ainsi qu'une deuxième couture 68.3 reliant les deuxième et troisième tronçons 62.2, 62.3 de la deuxième surlongueur 58.2, les première et deuxième coutures 68.2, 68.3 étant décalées l'une par rapport à l'autre et s'étendant sur quasiment toute la longueur du deuxième tronçon 62.2. Selon une configuration visible sur la figure 13, le seuil de résistance S1 de la première liaison fusible 64 est inférieur au seuil de résistance S2 de la deuxième liaison fusible 66. Ce premier seuil S1 de la première liaison fusible 64 est déterminé de manière à ce que la première liaison fusible 64 se rompe en cas d'une différence de pression de part et d'autre de la barrière amovible 30 dépassant un seuil donné, par exemple en cas de dépressurisation dans la cabine de pilotage 12 ou la cabine de passagers 14. La longueur L1 de la première surlongueur 58.1 est déterminée pour obtenir un flux d'air satisfaisant entre la cabine de pilotage 12 et la cabine de passagers 14 en cas de dépressurisation dans l'une ou l'autre des cabines.

Ainsi, au moins une surlongueur 58.1, 58.2 et au moins une liaison fusible 64, 66 assurent une fonction d'équilibrage des pressions de part et d'autre de la barrière amovible 30 en cas de dépressurisation.

Les seuils de résistance S1, S2 des première et deuxième liaisons fusibles 64, 66 sont déterminés pour limiter la propagation des efforts vers l'encadrement 34. Dans ce cas, la rupture des première et deuxième liaisons fusibles 64, 66 absorbe une partie ou la totalité de l'énergie engendrée lors de la tentative d'intrusion. Ainsi, la barrière amovible 30 provoque au niveau des première et deuxième liaisons 46.1, 46.2 des efforts F1 (environ égal à S1), F2 (environ égal à S2) inférieurs à ceux nécessaires pour détériorer ou rompre les première et deuxième liaisons 46.1, 46.2. De plus la somme de ces efforts F1 et F2 est inférieure à la somme des efforts qu'un système de barrière rigide engendrerait sur les montants 36.1 et 36.2, limitant ainsi les besoins de renforcer ces montants et les structures sur lesquelles ils sont fixés.

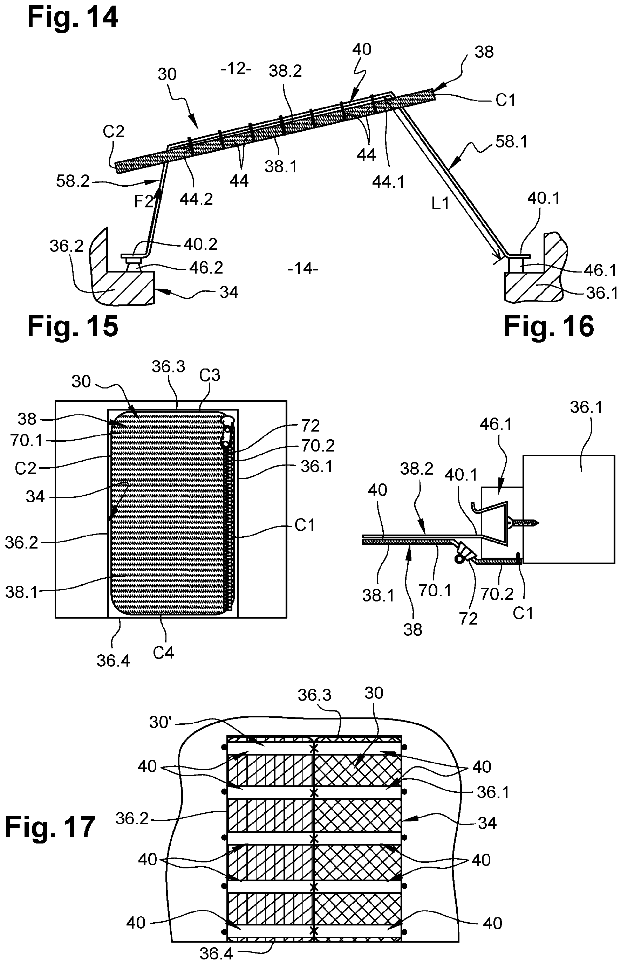

Selon un mode de réalisation visible sur les figures 15 et 16, lorsque la première liaison 46.1 de chaque sangle 40, positionnée à proximité du premier côté C1 du panneau 38, est permanente, ce premier côté C1 du panneau 38 est relié au premier bord 36.1 de l'encadrement 34. En complément, le panneau 38 comprend au moins deux parties 70.1, 70.2 reliées par une jonction fusible longitudinale 72 s'étendant entre les troisième et quatrième côtés C3, C4, parallèle au premier côté C1 et positionnée à proximité du premier côté C1. Selon une configuration, la jonction fusible longitudinale 72 est une glissière qui présente une résistance déterminée de manière à se rompre en cas de tentative d'intrusion et/ou de dépressurisation, avant les liaisons fusibles 64, 66 présentes au niveau des surlongueurs 58.1, 58.2.

Quel que soit le mode de réalisation, la première liaison 46.1 est configurée pour relier au moins temporairement la première extrémité 40.1 de la sangle à un premier bord 36.1 de l'encadrement 34 et la deuxième liaison 46.2 est configurée pour relier au moins temporairement la deuxième extrémité 40.2 de la sangle 40 à un deuxième bord 36.2 de l'encadrement 34. Par au moins temporairement, on entend que la première ou deuxième liaison 46.1, 46.2 est configurée pour relier temporairement ou de manière permanente la première ou deuxième extrémité 40.1, 40.2 de la sangle à un premier ou deuxième bord 36.1, 36.2 de l'encadrement 34.

Lorsque la deuxième extrémité 46.2 de chaque sangle 40, positionnée à proximité du deuxième côté C2 du panneau 38, est reliée à un montant d'un système d'accrochage 48, relié au deuxième bord 36.2 de l'encadrement 34, le deuxième côté C2 du panneau 38 peut être relié à ce montant. Dans ce cas, en complément, le panneau 38 comprend au moins deux parties reliées par une jonction fusible longitudinale s'étendant entre les troisième et quatrième côtés C3, C4, parallèle au deuxième côté C2 et positionnée à proximité du deuxième côté C2.

Selon un mode de réalisation, le panneau 38 comprend au moins un côté C1, C2 relié directement ou indirectement à l'encadrement 34 et présente au moins deux parties 70.1, 70.2 reliées par au moins une jonction fusible longitudinale 72 positionnée proche du et parallèlement au côté C1, C2 du panneau 38 relié directement ou indirectement à l'encadrement 34.

Le fait que les premier et/ou deuxième côtés C1 et C2 soient reliés au premier bord 36.1 de l'encadrement 34 et/ou à un montant du système d'accrochage 48 lui-même relié au deuxième bord 36.2 de l'encadrement 34 contribue à améliorer l'esthétique de la barrière amovible 30.

Lorsque la barrière amovible 30 est utilisée pour délimiter un sas d'entrée 32 d'une cabine de pilotage 12, la paroi latérale 24 du couloir 22 (à laquelle sont reliées les premières liaisons 46.1) comprend un logement 74 dimensionné pour loger la barrière amovible 30 à l'état ouvert.

Bien que décrite appliquée à un sas d'entrée d'une cabine de pilotage d'un aéronef, la barrière amovible 30 selon l'invention peut être utilisée dans différents véhicules (bateau, bus, train, aéronef,...) dans lesquels il est nécessaire d'interdire temporairement un passage à travers une ouverture 28.

Quelle que soit l'application, quel que soit le mode de réalisation, l'encadrement 34 délimitant une ouverture 28 comprend une (ou plusieurs) barrière(s) amovible(s) 30, 30' configurée(s) pour occuper un état ouvert dans lequel elle(s) dégage(nt) l'ouverture 28 et un état fermé dans lequel elle(s) obture(nt) l'ouverture 28, au moins l'une des barrières amovibles étant telle que décrite précédemment. Ainsi, comme illustré sur la figure 17, l'encadrement 34 peut comprendre deux barrières amovibles 30, 30' reliées entre elles par au moins un système d'accrochage 48, chacune d'elles étant reliées à un des bords de l'encadrement 34. L'invention permet d'obtenir une barrière amovible 30 de conception simple et légère, qui peut être installée sur les nouveaux véhicules ou sur les véhicules existants.

Les surlongueurs 58.1, 58.2 et les première et deuxième liaisons fusibles 64, 66 permettent d'obtenir une barrière amovible 30 apte à équilibrer les pressions de part et d'autre de la barrière amovible 30 en cas de dépressurisation, résistante, capable d'absorber une partie de l'énergie générée et de limiter les efforts transmis à l'encadrement 34 lors d'une tentative d'intrusion. Cette barrière amovible 30 permet de ne pas avoir besoin de renforcer les structures entourant la structure amovible 30 et par conséquent de ne pas augmenter leur masse. De plus, ces structures n'ont pas besoin d'intégrer des systèmes d'équilibrage des pressions.

Les coûts d'entretien de la barrière amovible 30 sont les plus faibles possible.

Enfin, le panneau 38 de la barrière amovible 30 peut être décoré afin de le rendre le plus esthétique possible. Il peut aussi comprendre des évidements pour permettre d'observer le sas 32 depuis la cabine de passagers 14.

## Revendications

1. Barrière amovible (30) comprenant un panneau (38) configuré pour obturer au moins partiellement une ouverture (28) délimitée par un encadrement (34), la barrière amovible (30) comprenant plusieurs sangles (40) reliées chacune au panneau (38) par au moins un élément de jonction (44) et présentant chacune des première et deuxième extrémités (40.1, 40.2), **caractérisée** en ce la barrière amovible (30) comprend, pour chaque sangle (40), une première liaison (46.1) configurée pour relier au moins temporairement la première extrémité (40.1) de la sangle à un premier bord (36.1) de l'encadrement (34), une deuxième liaison (46.2) configurée pour relier au moins temporairement la deuxième extrémité (40.2) de la sangle (40) à un deuxième bord (36.2) de l'encadrement (34), au moins une surlongueur (58.1, 58.2) repliée, positionnée entre l'élément de jonction (44) et au moins une des première et deuxième extrémités (40.1, 40.2) de la sangle (40), ainsi qu'au moins une liaison fusible (64, 66) maintenant la surlongueur (58.1, 58.2) repliée.

2. Barrière amovible (30) selon la revendication 1, **caractérisée en ce que** ladite au moins une surlongueur (58.1, 58.2) de chaque sangle (40) est située au niveau de la première extrémité ou de la deuxième extrémité de ladite sangle (40) de telle façon que :
- lorsque la surlongueur correspond à une première surlongueur au niveau de la première extrémité (40.1) de la sangle (40), la sangle (40) comprend ladite première surlongueur (58.1) repliée et au moins une première liaison fusible (64) maintenant la première surlongueur (58.1) repliée et présentant un premier seuil de résistance (S1) ; et
- lorsque la surlongueur correspond à une deuxième surlongueur au niveau de la deuxième extrémité (40.2) de la sangle (40), la sangle (40) comprend ladite deuxième surlongueur (58.2) repliée et au moins une deuxième liaison fusible (66) maintenant la deuxième surlongueur (58.2) repliée et présentant un deuxième seuil de résistance (S2).

3. Barrière amovible (30) selon la revendication 2, **caractérisée en ce que** chaque sangle (40) comprend ladite première surlongueur (58.1) et ladite deuxième surlongueur (58.2).

4. Barrière amovible (30) selon la revendication 2 ou 3, **caractérisée en ce que** chaque surlongueur (58.1, 58.2) comprend au moins deux plis (60.1, 60.2) délimitant au moins trois tronçons (62.1, 62.2, 62.3) superposés les uns sur les autres et **en ce que** la liaison fusible (64, 66) de chaque surlongueur (58.1, 58.2) comprend au moins une couture (68.1, 68.2, 68.3) reliant au moins deux tronçons (62.1, 62.2, 62.3) de la surlongueur (58.1, 58.2) et présentant une longueur (d1, d2, d3) ainsi qu'une densité de points de couture, la longueur (d1, d2, d3) et/ou la densité de points de couture de chaque couture (68.1, 68.2, 68.3) étant ajustées en fonction du seuil de résistance (S1, S2) souhaité pour la première ou deuxième liaison fusible (64, 66).

5. Barrière amovible (30) selon l'une des revendications 2 à 4, **caractérisée en ce que** le premier seuil de résistance (S1) de la première liaison fusible (64) est inférieur au deuxième seuil de résistance (S2) de la deuxième liaison fusible (66), le premier seuil (S1) étant déterminé de manière à ce que la première liaison fusible (64) se rompe en cas d'une différence de pression de part et d'autre de la barrière amovible (30) dépassant un seuil donné.

6. Barrière amovible (30) selon l'une des revendications 2 à 5, **caractérisée en ce que** pour chaque sangle (40), le seuil de résistance (S1, S2) de chaque liaison fusible (64, 66) est déterminé pour éviter un endommagement de la sangle (40) et des première et deuxième liaisons (46.1, 46.2) en cas d'un chargement de la barrière amovible (30).

7. Barrière amovible (30) selon l'une des revendications précédentes, **caractérisée en ce que** le panneau (38) est souple.

8. Barrière amovible (30) selon la revendication précédente, **caractérisée en ce que** le panneau (38) comprend au moins un renfort (42) pour le rigidifier.

9. Aéronef comprenant au moins une barrière amovible selon l'une des revendications précédentes.

10. Aéronef comportant une cabine de pilotage (12), une cabine de passagers (14), un sas d'entrée (32) reliant la cabine de passagers (14) et la cabine de pilotage (12) délimité par une porte blindée (20) ainsi qu'une barrière amovible (30), selon l'une des revendications 1 à 7, décalée vers la cabine de passagers (14) par rapport à la porte blindée (20), ladite barrière amovible (30) étant positionnée au niveau d'un encadrement (34) délimitant une ouverture (28) et comportant des premier et deuxième bords (36.1, 36.2) parallèles entre eux, **caractérisé en ce que** le panneau (38) présente une première face (38.1) orientée vers la cabine de passagers (14) ainsi qu'une deuxième face (38.2) opposée à la première face (38.1) et **en ce que** les sangles (40) sont positionnées sur au moins l'une des première et deuxième faces (38.1, 38.2).

11. Aéronef selon la revendication 9 ou 10, **caractérisé en ce que** la barrière amovible (30) comprend au moins un système d'accrochage (48) coopérant avec l'encadrement (34) et configuré pour relier temporairement les deuxièmes extrémités (40.2) des sangles (40) et l'encadrement (34).

12. Aéronef selon la revendication précédente, **caractérisé en ce que** chaque système d'accrochage (48) comprend un oeillet (52), positionné sur la sangle (40) à proximité de la deuxième extrémité (40.2) ainsi qu'un crochet (54) solidaire de l'encadrement (34), le système d'accrochage (48) étant configuré pour occuper un état décroché dans lequel la sangle (40) est écartée du crochet (54) et un état accroché dans lequel l'oeillet (52) de la sangle (40) est suspendu au crochet (54), pour chaque système d'accrochage (48), le crochet (54) étant positionné sur une face du deuxième bord (36.2) de l'encadrement (34) orientée vers la cabine de pilotage (12).

13. Aéronef selon l'une des revendications 9 à 12, **caractérisé en ce que** le panneau (38) comprend au moins deux parties (70.1, 70.2) reliées par une jonction fusible (72).

14. Aéronef selon la revendication précédente, **caractérisé en ce que** le panneau (38) comprend au moins un côté (C1, C2) relié directement ou indirectement à l'encadrement (34), la jonction fusible (72) étant positionnée proche du et parallèlement au côté (C1, C2) du panneau (38) relié directement ou indirectement à l'encadrement (34), la jonction fusible (72) étant telle qu'elle présente une limite de résistance inférieure à celles des jonctions fusibles (64, 66) des sangles (40).

## Patentansprüche

1. Abnehmbare Barriere (30) mit einer Wand (38), die so eingerichtet ist, dass sie eine von einem Rahmen (34) begrenzte Öffnung (28) zumindest teilweise verschließt, wobei die abnehmbare Barriere (30) mehrere Gurte (40) aufweist, die jeweils über wenigstens ein Verbindungselement (44) mit der Wand (38) verbunden sind und jeweils ein erstes und ein zweites Ende (40.1, 40.2) aufweisen, **dadurch gekennzeichnet, dass** die abnehmbare Barriere (30) für jeden Gurt (40) eine erste Verbindung (46.1), die so eingerichtet ist, dass sie zumindest zeitweise das erste Ende (40.1) des Gurtes mit einem ersten Rand (36.1) des Rahmens (34) verbindet, eine zweite Verbindung (46.2), die so eingerichtet ist, dass sie das zweite Ende (40.2) des Gurtes (40) zumindest zeitweise mit einem zweiten Rand (36.2) des Rahmens (34) verbindet, wenigstens eine Überlänge (58.1, 58.2), die zwischen dem Verbindungselement (44) und wenigstens einem der ersten und zweiten Enden (40.1, 40.2) des Gurtes (40) angeordnet ist, sowie wenigstens eine lösbare Verbindung (64, 66) aufweist, die die Überlänge (58.1, 58.2) umgeschlagen hält.

2. Abnehmbare Barriere (30) nach Anspruch 1, **dadurch gekennzeichnet, dass** die wenigstens eine Überlänge (58.1, 58.2) jedes Gurtes (40) am ersten Ende oder am zweiten Ende des Gurtes (40) derart angeordnet ist, dass:
- wenn die Überlänge einer ersten Überlänge am ersten Ende (40.1) des Gurtes (40) entspricht, der Gurt (40) die erste umgeschlagene Überlänge (58.1) und wenigstens eine erste lösbare Verbindung (64) umfasst, die die erste Überlänge (58.1) umgeschlagen hält und eine erste Widerstandsschwelle (S1) aufweist; und
- wenn die Überlänge einer zweiten Überlänge am zweiten Ende (40.2) des Gurtes (40) entspricht, der Gurt (40) die zweite umgeschlagene Überlänge (58.2) und wenigstens eine zweite lösbare Verbindung (66) umfasst, die die zweite Überlänge (58.2) umgeschlagen hält und eine zweite Widerstandsschwelle (S2) aufweist.

3. Abnehmbare Barriere (30) nach Anspruch 2, **dadurch gekennzeichnet, dass** jeder Gurt (40) die erste Überlänge (58.1) und die zweite Überlänge (58.2) aufweist.

4. Abnehmbare Barriere (30) nach Anspruch 2 oder 3, **dadurch gekennzeichnet, dass** jede Überlänge (58.1, 58.2) wenigstens zwei Faltungen (60.1, 60.2) aufweist, die wenigstens drei übereinanderliegende Abschnitte (62.1, 62.2, 62.3) begrenzen, und dass die lösbare Verbindung (64, 66) jeder Überlänge (58.1, 58.2) wenigstens eine Naht (68.1, 68.2, 68.3), die wenigstens zwei Abschnitte (62.1, 62.2, 62.3) der Überlänge (58.1, 58.2) verbindet und eine Länge (d1, d2, d3) sowie eine Stichdichte aufweist, wobei die Länge (d1, d2, d3) und/oder die Stichdichte jeder Naht (68.1, 68.2, 68.3) in Abhängigkeit von der gewünschten Widerstandsschwelle (S1, S2) für die erste oder zweite lösbare Verbindung (64, 66) eingestellt ist.

5. Abnehmbare Barriere (30) nach einem der Ansprüche 2 bis 4, **dadurch gekennzeichnet, dass** die erste Widerstandsschwelle (S1) der ersten lösbaren Verbindung (64) niedriger als die zweite Widerstandsschwelle (S2) der zweiten lösbaren Verbindung (66) ist, wobei die erste Schwelle (S1) so bestimmt ist, dass die erste lösbare Verbindung (64) bei einem Druckunterschied auf beiden Seiten der abnehmbaren Barriere (30), der eine gegebene Schwelle überschreitet, reißt.

6. Abnehmbare Barriere (30) nach einem der Ansprüche 2 bis 5, **dadurch gekennzeichnet, dass** für jeden Gurt (40) die Widerstandsschwelle (S1, S2) jeder lösbaren Verbindung (64, 66) so bestimmt ist, dass eine Beschädigung des Gurtes (40) und der ersten und zweiten Verbindung (46.1, 46.2) bei einer Belastung der abnehmbaren Barriere (30) vermieden wird.

7. Abnehmbare Barriere (30) nach einem der vorhergehenden Ansprüche, **dadurch gekennzeichnet, dass** die Wand (38) flexibel ist.

8. Abnehmbare Barriere (30) nach dem vorhergehenden Anspruch, **dadurch gekennzeichnet, dass** die Wand (38) wenigstens eine Verstärkung (42) aufweist, um sie zu versteifen.

9. Luftfahrzeug mit wenigstens einer abnehmbaren Barriere nach einem der vorhergehenden Ansprüche.

10. Luftfahrzeug mit einer Pilotenkabine (12), mit einer Passagierkabine (14), mit einer Eingangsschleuse (32), die die Passagierkabine (14) und die Pilotenkabine (12) verbindet und durch eine gepanzerte Tür (20) begrenzt ist, sowie mit einer abnehmbaren Barriere (30) nach einem der Ansprüche 1 bis 7, die in Richtung der Passagierkabine (14) in Bezug auf die Panzertür (20) versetzt ist, wobei die abnehmbare Barriere (30) an einem Rahmen (34) angeordnet ist, der eine Öffnung (28) begrenzt und erste und zweite Ränder (36.1, 36.2) aufweist, die zueinander parallel sind, **dadurch gekennzeichnet, dass** die Wand (38) eine erste Seite (38.1), die zur Passagierkabine (14) hin gerichtet ist, sowie eine zweite Seite (38.2) aufweist, die der ersten Seite (38.1) gegenüberliegt, und dass die Gurte (40) auf wenigstens einer der ersten und zweiten Seiten (38.1, 38.2) angeordnet sind.

11. Luftfahrzeug nach Anspruch 9 oder 10, **dadurch gekennzeichnet, dass** die abnehmbare Barriere (30) wenigstens ein Einhaksystem (48) umfasst, das mit dem Rahmen (34) zusammenwirkt und so eingerichtet ist, dass es die zweiten Enden (40.2) der Gurte (40) und den Rahmen (34) vorübergehend verbindet.

12. Luftfahrzeug nach dem vorhergehenden Anspruch, **dadurch gekennzeichnet, dass** jedes Einhaksystem (48) eine Öse (52), die auf dem Gurt (40) in der Nähe des zweiten Endes (40.2) angeordnet ist, sowie einen Haken (54) aufweist, der fest mit dem Rahmen (34) verbunden ist, wobei das Einhaksystem (48) so eingerichtet ist, dass es einen ausgehängten Zustand, in dem der Gurt (40) vom Haken (54) entfernt ist, und einen eingehängten Zustand einnimmt, in dem die Öse (52) des Gurts (40) im Haken (54) hängt, wobei sich der Haken (54) für jedes Einhaksystem (48) auf einer Seite des zweiten Rands (36.2) des Rahmens (34) befindet, der dem Cockpit (12) zugewandt ist.

13. Luftfahrzeug nach einem der Ansprüche 9 bis 12, **dadurch gekennzeichnet, dass** die Wand (38) wenigstens zwei Teile (70.1, 70.2) umfasst, die durch eine lösbare Verbindung (72) verbunden sind.

14. Luftfahrzeug nach dem vorhergehenden Anspruch, **dadurch gekennzeichnet, dass** die Wand (38) wenigstens eine Seite (C1, C2) aufweist, die unmittelbar oder mittelbar mit dem Rahmen (34) verbunden ist, wobei die lösbare Verbindung (72) nahe an und parallel zu der Seite (C1, C2) der Wand (38) angeordnet ist, die unmittelbar oder mittelbar mit dem Rahmen (34) verbunden ist, und wobei die lösbare Verbindung (72) so beschaffen ist, dass sie eine niedrigere Festigkeitsgrenze aufweist als die lösbaren Verbindungen (64, 66) der Gurte (40) .

## Claims

1. Removable barrier (30) including a panel (38) configured to block at least partly an opening (28) delimited by a frame (34), the removable barrier (30) comprising a plurality of straps (40) each connected to the panel (38) by at least one connection element (44) and each having first and second ends (40.1, 40.2), **characterized in that** the removable barrier (30) comprises, for each strap (40), a first connection (46.1) configured to connect the first end (40.1) of the strap to a first edge (36.1) of the frame (34) at least temporarily, a second connection (46.2) configured to connect the second end (40.2) of the strap (40) to a second edge (36.2) of the frame (34) at least temporarily, at least one folded overlength (58.1, 58.2) positioned between the connection element (44) and at least one of the first and second ends (40.1, 40.2) of the strap (40), as well as at least one breakable connection (64, 66) keeping the overlength (58.1, 58.2) folded.

2. Removable barrier (30) as claimed in claim 1, **characterized in that** said at least one overlength (58.1, 58.2) of each strap (40) is situated at the level of the first end or of the second end of said strap (40) so that:
- when the overlength corresponds to a first overlength at the level of the first end (40.1) of the strap (40), the strap (40) includes said folded first overlength (58.1) and at least one first breakable connection (64) keeping the first overlength (58.1) folded and having a first strength threshold (S1); and
- when the overlength corresponds to a second overlength at the level of the second end (40.2) of the strap (40), the strap (40) includes said folded second overlength (58.2) and at least one second breakable connection (66) keeping the second overlength (58.2) folded and having a second strength threshold (S2).

3. Removable barrier (30) as claimed in claim 2, **characterized in that** each strap (40) includes said first overlength (58.1) and said second overlength (58.2).

4. Removable barrier (30) as claimed in claim 2 or 3, **characterized in that** each overlength (58.1, 58.2) includes at least two folds (60.1, 60.2) delimiting at least three sections (62.1, 62.2, 62.3) superposed one on the other and **in that** the breakable connection (64, 66) of each overlength (58.1, 58.2) includes at least one seam (68.1, 68.2, 68.3) connecting at least two sections (62.1, 62.2, 62.3) of the overlength (58.1, 58.2) and having a length (d1, d2, d3) as well as a density of stitches, the length (d1, d2, d3) and/or the density of stitches of each seam (68.1, 68.2, 68.3) being adjusted as a function of the strength threshold (S1, S2) required for the first or second breakable connection (64, 66).

5. Removable barrier (30) as claimed in any one of claims 2 to 4, **characterized in that** the first strength threshold (S1) of the first breakable connection (64) is less than the second strength threshold (S2) of the second breakable connection (66), the first threshold (S1) being determined in such a manner that the first breakable connection (64) breaks in the event of a pressure difference on either side of the removable barrier (30) exceeding a given threshold.

6. Removable barrier (30) as claimed in any one of claims 2 to 5, **characterized in that** for each strap (40) the strength threshold (S1, S2) of each breakable connection (64, 66) is determined to prevent damaging the strap (40) and the first and second connections (46.1, 46.2) in the event of loading of the removable barrier (30).

7. Removable barrier (30) as claimed in any one of preceding claims, **characterized in that** the panel (38) is flexible.

8. Removable barrier (30) as claimed in the preceding claim, **characterized in that** the panel (38) includes at least one reinforcement (42) to stiffen it.

9. Aircraft including at least one removable barrier as claimed in any one of the preceding claims.

10. Aircraft including a cockpit (12), a passenger cabin (14), an entry airlock (32) connecting the passenger cabin (14) and the cockpit (12) delimited by an armored door (20) as well as a removable barrier (30) as claimed in any one of claims 1 to 7 offset toward the passenger cabin (14) relative to the armored door (20), said removable barrier (30) being positioned at the level of a frame (34) delimiting an opening (28) and including parallel first and second edges (36.1, 36.2), **characterized in that** the panel (38) has a first face (38.1) oriented toward the passenger cabin (14) and a second face (38.2) opposite the first face (38.1) and **in that** the straps (40) are positioned on at least one of the first and second faces (38.1, 38.2).

11. Aircraft as claimed in claim 9 or 10, **characterized in that** the removable barrier (30) includes at least one attachment system (48) cooperating with the frame (34) and configured to connect the second ends (40.2) of the straps (40) and the frame (34) temporarily.

12. Aircraft as claimed in the preceding claim, **characterized in that** each attachment system (48) includes an eyelet (52) positioned on the strap (40) in the vicinity of the second end (40.2) and a hook (54) rigidly attached to the frame (34), the attachment system (48) being configured to occupy an unattached state in which the strap (40) is spaced from the hook (54) and an attached state in which the eyelet (52) of the strap (40) is suspended from the hook (54), for each attachment system (48), the hook (54) being positioned on the face of the second edge (36.2) of the frame (34) oriented toward the cockpit (12).

13. Aircraft as claimed in any one of claims 9 to 12, **characterized in that** the panel (38) includes at least two parts (70.1, 70.2) connected by a breakable connection (72).

14. Aircraft as claimed in the preceding claim, **characterized in that** the panel (38) includes at least one side (C1, C2) connected directly or indirectly to the frame (34), the breakable connection (72) being positioned close to and parallel to the side (C1, C2) of the panel (38) connected directly or indirectly to the frame (34), the breakable connection (72) being such that it has a strength limit less than that of the breakable connections (64, 66) of the straps (40).
